# EUROPÄISCHE PATENTANMELDUNG

(11) **EP 3 916 666 A1**
(43) Veröffentlichungstag der Anmeldung: **01.12.2021**
(21) Anmeldenummer: 20176886.8
(22) Anmeldetag: 27.05.2020
(51) Int. Cl.: G06Q 30/06

(54) **AUSGABEGERÄT ZUM ANZEIGEN EINER INDIVIDUELLEN ZWEIDIMENSIONALEN ID UND VERFAHREN ZUM BESTELLEN VON WAREN UND/ODER DIENSTLEISTUNGEN**

(71) Anmelder: Yamamoto, Simon, 14656 Brieselang (DE)
(72) Erfinder: Yamamoto, Simon, 14656 Brieselang (DE); Alami, Mohamed, 65375 Oestrich-Winkel (DE)
(74) Vertreter: ETL IP Patent- und Rechtsanwaltsgesellschaft mbH

(57) **Zusammenfassung**

Um in gastronomischen Einrichtungen und sonstigen Geschäften den Bestellvorgang beim Kauf von Waren und/oder Dienstleistungen, zu optimieren, d.h. die Zuverlässigkeit und Sicherheit bei der Durchführung und Übermittlung der Bestellung zu erhöhen und möglicherweise Wartezeiten zu reduzieren, werden ein Ausgabegerät zum Anzeigen einer zweidimensionalen ID und ein dazugehöriges Verfahren vorgeschlagen, bei dem folgende Schritte durchgeführt werden:
a. Generierung einer zweidimensionalen ID und Ausgabe derselben auf dem Display des Ausgabegeräts,
b. Scannen der ID mit einem Lesegerät, welches eingerichtet ist, die ID zu decodieren,
c. Öffnen einer Zielseite und/oder einer App auf dem Lesegerät oder einem mit dem Lesegerät verbundenem Endgerät, wobei die Zielseite oder App eingerichtet ist, die zu bestellende Ware durch Kennzeichnung auszuwählen,
d. Verknüpfen der ausgewählten Ware mit zumindest einer in der ID hinterlegten Information.

## Beschreibung

Die Erfindung betrifft ein Ausgabegerät zum Anzeigen einer individuellen zweidimensionalen ID, sowie ein Verfahren zum Bestellen von Waren und/oder Dienstleistungen in einem Ladengeschäft oder einer im Weitesten Sinne gastronomischen Einrichtung unter Verwendung eines solchen Ausgabegeräts.

Insbesondere in der Gastronomie, aber auch in anderen Ladenlokalen und Geschäften ist der Kaufvorgang von einer starken Interaktion zwischen Personal und Kunde geprägt. In der Gastronomie setzt sich ein Kunde an eine bestimmte Position im Lokal, insbesondere an einem bestimmten Tisch, in einen bestimmten Raum oder einem Platz an der Bar. Er bekommt durch das Bedienpersonal eine Information über die zur Verfügung stehenden Speisen und Getränke und trifft eine Auswahl. Der Kellner notiert die Bestellung und ordnet diese dieser bestimmten Position zu. Anschließend wird die Bestellung an die Küche und/oder Bar übergeben. Sind die gewünschten Speisen und Getränke dann zubereitet, werden sie durch das Personal zu der Position gebracht.

Dieser Prozess ist auch auf andere Bereiche des Kaufens und Verkaufens von Waren oder Dienstleistungen in Geschäften übertragbar. Beim Bestellvorgang wartet der Kunde unter Umständen, bis ein für ihn zuständiges Personal zur Verfügung steht, beispielsweise bei einem Friseur. Erst dann beginnt der Auswahl- und der Bestellvorgang. Der Kunde übermittelt im persönlichen Kontakt seine Wünsche. Diese werden notiert und anschließend weitergegeben. Anschließend wird die Ware ausgegeben. Ist die Ausgabe logistisch aufwändiger oder sind Aufnahme des Bestellvorgangs und Ausgabe der Bestellung entkoppelt, ist eine eindeutige Zuordnung von Bestellung und bereitgestellter Ware beziehungsweise Position der Aus-/Übergabe wichtig.

Die Interaktion mit dem Personal, insbesondere beim Bestellvorgang ist zum einen zeitaufwändig und zum anderen unsicher. Unsicher ist er sowohl in Bezug auf menschliche Fehler als auch in gesundheitlicher Hinsicht, da der Kontakt zu anderen Menschen immer auch die Gefahr der Übertragung von Krankheitserregern mit sich bringt.

Aufgabe der Erfindung ist es nun, eine Möglichkeit bereitzustellen, den Bestellvorgang beim Kauf von Waren, insbesondere in der Gastronomie oder von Dienstleistungen, zu optimieren. Insbesondere soll ein Verfahren bereitgestellt werden, welches es ermöglicht, die Zuverlässigkeit und Sicherheit bei der Durchführung und Übermittlung der Bestellung zu erhöhen und möglicherweise Wartezeiten zu reduzieren.

Diese Aufgabe wird durch ein Ausgabegerät zum Anzeigen einer zweidimensionalen ID und ein Verfahren zu dessen Verwendung beim Bestellvorgang mit den Merkmalen der unabhängigen Ansprüche gelöst.

Somit betrifft ein erster Aspekt der Erfindung ein Ausgabegerät zum Anzeigen einer individuellen zweidimensionalen ID. Das Ausgabegerät umfasst ein Gehäuse, an welchem ein Display zur Ausgabe einer zweidimensionalen ID angeordnet ist. Mit dem Display ist ein Steuergerät zur Steuerung der Ausgabe der ID elektronisch und steuertechnisch verbunden. Die Steuerung der Ausgabe der ID durch das Steuergerät erfolgt nach einem im Steuergerät hinterlegten definierten Algorithmus. Erfindungsgemäß ist das Steuergerät im Stande, in vordefinierten zeitlichen Intervallen eine individuelle zweidimensionale ID zu generieren, welche auf dem Display ausgegeben wird.

Das erfindungsgemäße Ausgabegerät ermöglicht somit eine individuelle ID zu generieren, die für ein mobiles Endgerät, beispielsweise ein Smartphone oder ein Tablet auslesbar ist. In der ID sind vordefiniert spezifische Daten hinterlegbar, die in jeder durch ein spezifisches Ausgabegerät ausgegebenen ID gleich sind. Ferner besteht durch die Änderung der ID in vordefinierten Zeitintervallen die Möglichkeit, für das genutzte Endgerät zudem individuelle Informationen zu hinterlegen und somit eine zu einer bestimmten Zeit abgerufene ID mit einem einzigen durch das die ID ausgelesene Endgerät ausgelösten Vorgang eineindeutig zu beschreiben.

Im hinterlegten Algorithmus ist bevorzugt in decodierter Form eine Kennzeichnung, beispielsweise der Position und/oder eines Zeitstempels durch eine vorbestimmte Zahlenfolge in vorbestimmter Ziffernzahl definiert. Sind mehrere Informationen hinterlegt, sind diese bevorzugt durch definierte Ziffernanzahl und/oder Trennzeichen, wie Sonderzeichen separierbar.

In bevorzugter Ausgestaltung der Erfindung ist vorgesehen, dass das Display ein nicht leuchtendes Display, insbesondere ein elektronisches Papier umfasst oder ein solches ist. Dies hat insbesondere den Vorteil, dass das Display wartungsarm ist und im Vergleich zu leuchtenden Displays, beispielsweise LEDs (light emitting diode) nur einen Bruchteil an Energie verbraucht. Ferner kann das erfindungsgemäße Ausgabegerät in dieser Ausgestaltung auch dort verwendet werden, wo möglichst wenig Strahlung erwünscht ist (Hotelzimmer, gemütliche abgedunkelte Restaurants oder Bars) und/oder eine hohe Blendung von außen das Lesen herkömmlicher LEDs erschwert oder gar verhindert (Strand, Terasse etc.). Ist die ID einmal ausgegeben, ist keine weitere Ansteuerung an das Display erforderlich. Die ID wird also nicht zwischengespeichert, sondern verbleibt solange auf dem Display, bis es nach Ablauf des Zeitintervalls durch eine neu generierte ID überschrieben wird.

Mit Vorteil umfasst die ID einen QR-Code oder besteht aus einem solchen. Der Vorteil der Verwendung von QR-Codes besteht insbesondere in der Möglichkeit der Hinterlegung großer und unterschiedlicher Informationen. So kann beispielsweise eine URL zur Erlangung einer definierten Website mittels QR codiert sein, aber auch Zahlenkombinationen oder Texte. Darüber hinaus ist das Verfahren nicht zuletzt aufgrund der automatischen Fehlerkorrektur sehr robust. Der QR-Code besteht aus einer quadratischen Matrix aus schwarzen und weißen Quadraten, die die kodierten Daten binär darstellen. Eine spezielle Markierung in drei der vier Ecken des Quadrats gibt die Orientierung vor. Die Daten im QR-Code sind durch einen fehlerkorrigierenden Code erweitert. Dadurch wird der Verlust von bis zu 30 % des Codes toleriert, d. h., er kann auch dann noch dekodiert werden.

In weiter bevorzugter Ausgestaltung der Erfindung ist vorgesehen, dass auf Basis des Algorithmus automatisiert, insbesondere in vordefinierten Intervallen von mehr als 2 Minuten, insbesondere im Bereich von 5 und 120 Minuten, vorzugsweise im Bereich von 10 bis 60 Minuten, je eine neue ID generiert wird. Es zeigte sich, dass je nach Anwendungsbereich des Ausgabegeräts, die genannten Zeitintervalle besonders geeignet und erforderlich sind. Insbesondere bei Verwendung des Ausgabegeräts in der Gastronomie sind Zeitintervalle im Bereich von 10 bis 120 Minuten, insbesondere im Bereich von 15 bis 30 Minuten besonders bevorzugt, da diese Intervalle üblichen Zeiteinheiten entsprechen, die zur Auswahl von Speisen und Getränken aus einer Speisekarte benötigt werden.

Alternativ wird nach jedem Scanvorgang, bzw. jedem Bestellvorgang eine neue ID generiert.

Mit besonderem Vorteil ist das Steuergerät autark und weist insbesondere keine Verbindung zu externen Steuergeräten auf. Dies macht die Generierung der ID absolut unabhängig von anderen Endgeräten und stellt somit sicher, dass die Generierung der ID nicht von extern beeinflussbar ist. Mit anderen Worten weist das Ausgabegerät bevorzugt keine Lan, W-Lan, NFC (*near field comunication* wie *blue tooth* oder ähnliches) oder andere Schnittstelle auf, so dass eine Kommunikation nur in eine Richtung, nämlich vom Ausgabegerät zum Lesegerät erfolgen kann.

In weiter bevorzugter Ausgestaltung der Erfindung ist vorgesehen, dass die ID Informationen aufweist, die eine individuelle Charakterisierung, insbesondere über einen spezifischen Ort, eine aktuelle Zeit und/oder eine bestimmte Person ermöglichen. Dies hat den Vorteil, dass die generierte ID trotz deren Erneuerung in vordefinierten Zeitintervallen einem Ausgabegerät und den damit verbundenen Parametern eindeutig zuordenbar ist. Bei Verwendung in der Gastronomie beispielsweise können Tischnummer oder Barplatz hinterlegt sein, in der Schlange einer Warteschlange die Warteposition oder im Möbelhaus das Ausgabefenster. Die Zuordnung zu spezifischen Informationen auf der ID ermöglicht die Zuordnung der Bestellung zu dem Ausgabegerät. Somit wird die Bestellung eindeutig zuordenbar, ohne spezifische Informationen des Bestellers selbst zu verwenden. Spezifische Personendaten und Handynummern oder ähnliches sind für die eindeutige Zuordnung der Bestellung nicht erforderlich. Der Besteller kann vielmehr anonym bleiben. Dies ermöglicht, trotz automatisiertem Bestellvorgang, eine in Bezug auf datenschutzrechtliche Gesichtspunkte sichere Bestellung.

Insbesondere in dieser Ausgestaltung ist es vorteilhaft, wenn die auf dem Display des Ausgabegeräts angezeigte ID mit einem mobilen Endgerät, welches als Lesegerät für die ID ausgestaltet ist, beispielsweise einem Smartphone oder Tablet, ausgelesen wird, und das mobile Endgerät ferner eingerichtet ist, über ein Datenverarbeitungsprogramm, welches mittelbar (auf einem weiteren Endgerät oder Server installiert, auf welchem sich das mobile Endgerät einwählt) oder unmittelbar (beispielsweise als App auf dem Endgerät installiert) mit dem mobilen Endgerät verbunden ist, Daten mit den Informationen der ID zu verknüpfen. Mit anderen Worten umfasst das Endgerät einen Scanner zum Auslesen der ID oder ist mit einem solchen verbunden oder verbindbar und/ oder ist eingerichtet über die ID eine Website und/oder App zu öffnen, über die die Daten generiert bzw. eingegeben werden, welche dann mit den zu der ID gehörigen Informationen verknüpft werden. Dies kann genutzt werden, um eine Liste bestellbarer Waren, in der Gastronomie meist eine Speise- und/oder Getränkekarte, auf dem mobilen Endgerät aufzurufen und durch Markierung einer Auswahl der gelisteten Waren eine Bestellung durchzuführen. Diese wird dann mit den auf der ID codierten Informationen, wie Tischnummer und so weiter verknüpft. Die Bestellung ist dann dem Besteller eindeutig zuordenbar. Nach Bearbeitung der Bestellung, also beispielsweise Bereitstellung der Getränke und/oder Speisen, wird diese fehlerfrei an die die Besteller ausgegeben.

Mit besonderem Vorteil ist in der ID ferner eine URL einer Zielseite, die insbesondere zu einer App oder einer Bestellkarte oder einem Katalog auf einer Website führt, hinterlegt. Durch den Scan- bzw. Lesevorgang wird dann auf dem mobilen Endgerät des Bestellers direkt die Bestellseite oder eine App geöffnet. Alternativ öffnet der Benutzer die App oder Website manuell auf seinem mobilen Endgerät vor oder nach dem Scannen der ID. Im Gegensatz zum automatisierten Öffnen durch das Lesen der ID, welches schneller geht und weniger Interaktion des Bestellers erfordert, bietet die letztgenannte Variante ein höheres Maß an Sicherheit, da der Besteller selbstbestimmt die entsprechenden Apps bzw. Websites öffnet bzw. installiert.

Ein weiterer Aspekt der Erfindung betrifft ein Verfahren zum Bestellen einer Ware und/oder Dienstleistungen in einem Ladengeschäft, einer im Weitesten Sinne gastronomischen Einrichtung oder dergleichen unter Verwendung eines erfindungsgemäßen Ausgabegeräts.

Unter im weitesten Sinne gastronomischer Einrichtung wird vorliegend neben Restaurants und Bars auch Poolbars, Diskotheken, Hotelzimmer und dergleichen verstanden.

Das Verfahren sieht zunächst vor, eine zweidimensionalen ID mittels eines Steuergeräts nach einem vordefinierten Algorithmus zu generieren und diese auf dem Display des Ausgabegeräts auszugeben(a.). Anschließend wird die ID mit einem als Lesegerät eingerichteten mobilen Endgerät gescannt und decodiert (b.). Zuvor oder anschließend wird eine Zielseite und/oder eine App auf dem mobilen Endgerät oder einem mit diesem verbundenem Endgerät geöffnet, wobei die Zielseite oder App eingerichtet ist zu bestellende Ware durch Kennzeichnung auszuwählen (c.). Nach erfolgter Auswahl wird die ausgewählte Ware mit zumindest einer in der ID hinterlegten Information verknüpft (d.). Nach einer definierten Zeitspanne wird die ID auf dem Ausgabegerät durch eine neue ID überschrieben (e.). Somit erfolgt eine eindeutige Zuordnung der Bestellung zum Ausgabegerät bzw. dem Besteller, wobei die Überschreibung der ID sicherstellt, dass eine ID nur für einen spezifischen Besteller bzw. eine spezifische Bestellung genutzt wird.

Das erfindungsgemäße Verfahren findet insbesondere in der Gastronomie, am Strand, in Hotels oder Diskotheken Anwendung, ist aber auch bei anderen Bestellvorgängen einsetzbar, die nicht über den üblichen Online-Handel erfolgen. Vorteile bietet das erfindungsgemäße Verfahren insbesondere bei solchen Bestellvorgängen, bei denen eine längere Wartezeit zwischen Bestellvorgang und Fertig- bzw. Zusammenstellung der Ware üblich oder erforderlich ist.

Mit Vorteil ermöglichen die in Schritt (d.) zu verknüpfenden Informationen eine eindeutige Zuordnung einer Position, eines Ausgabeorts oder Wartenummer, insbesondere in einer gastronomischen Einrichtung. Dies stellt sicher, dass die fertig- oder zusammengestellte Ware, insbesondere die Speisen, eindeutig einem Besteller zugeordnet werden und zum richtigen Tisch/ Zimmer/ Platz gelangen. Ferner erfolgt dies, ohne dass es nötig ist spezifische Daten des Bestellers selbst, beispielsweise aus dem mobilen Endgerät, zu verarbeiten oder zu speichern.

In bevorzugter Ausgestaltung des erfindungsgemäßen Verfahrens ist vorgesehen, dass zumindest eine der Informationen, insbesondere die Position für eine vorbestimmte Zeitdauer und/oder bis zur Freigabe, insbesondere über ein weiteres Endgerät steuerbaren Signals zur Verknüpfung mit einer weiteren Auswahl, insbesondere über ein anderes Lesegerät, blockiert wird. Dies stellt sicher, dass keine Doppelbestellung zu den spezifischen Informationen erfolgt. Am Beispiel der Gastronomie wird insbesondere sichergestellt, dass zu einem Tisch bzw. einer Position bis zur Freigabe keine weitere Bestellung aufgegeben werden kann. Insbesondere wird verhindert, dass ein zu einer bestimmten Position zugeordnete ID nicht gespeichert (abfotographiert) und später, beispielsweise vor Betreten der Einrichtung, erneut genutzt werden kann. Die ID ist nur dann nutzbar, wenn man sich am definierten Ort befindet.

Die Freigabe der erfolgt beispielsweise aktiv über ein weiteres Endgerät (zum Beispiel durch ein die Bestellung aufnehmendes Personal) oder automatisiert, beispielsweise bei Bezahlung. Die Tischnummer kann demnach nicht durch Dritte benutzt werden, bis der Bezahlvorgang durch Personal bestätigt wurde.

Alternativ oder zusätzlich kann mit einer weiteren durch dasselbe Ausgabegerät generierte ID eine Folgebestellung vor der Freigabe erfolgen, wobei jedoch sichergestellt wird, dass derselbe Besteller die Bestellung durchführt. Hierzu können beispielsweise spezifische Informationen des mobilen Endgeräts hinterlegt sein, die bei Verknüpfung der Daten mit den spezifischen in der ID hinterlegten Informationen über das Ausgabegerät eine Folgebestellung ermöglichen.

Die einzelnen Ausgestaltungen sind, sofern im Einzelfall nicht anders beschrieben, mit Vorteil miteinander kombinierbar. Insbesondere sind die beschriebenen Ausgestaltungen des erfindungsgemäßen Ausgabegeräts ausdrücklich auf die des Verfahrens anwendbar.

Nachfolgend wird die Erfindung am Beispiel einer Figur exemplarisch genauer beschrieben.

Es zeigen
- Figur 1: eine schematische Querschnittszeichnung eines erfindungsgemäßen Ausgabegeräts in einer bevorzugten Ausführungsform
- Figur 2: eine schematische Darstellung eines Ausgabegeräts in Schrägaufsicht in der bevorzugten Ausführungsform der Erfindung, und
- Figur 3: eine schematische Explosionsdarstellung eines Ausgabegeräts in der bevorzugten Ausführungsform der Erfindung.

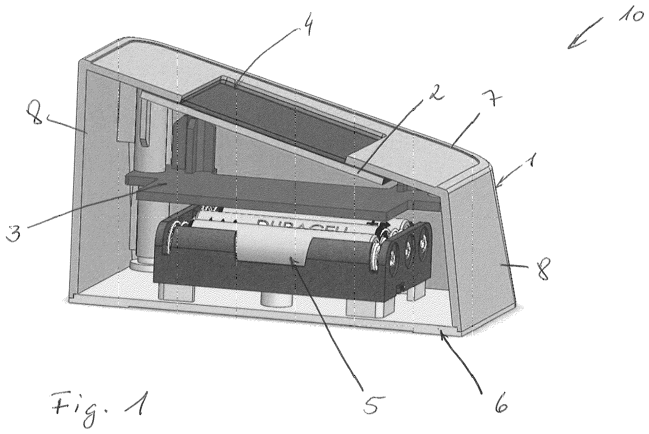

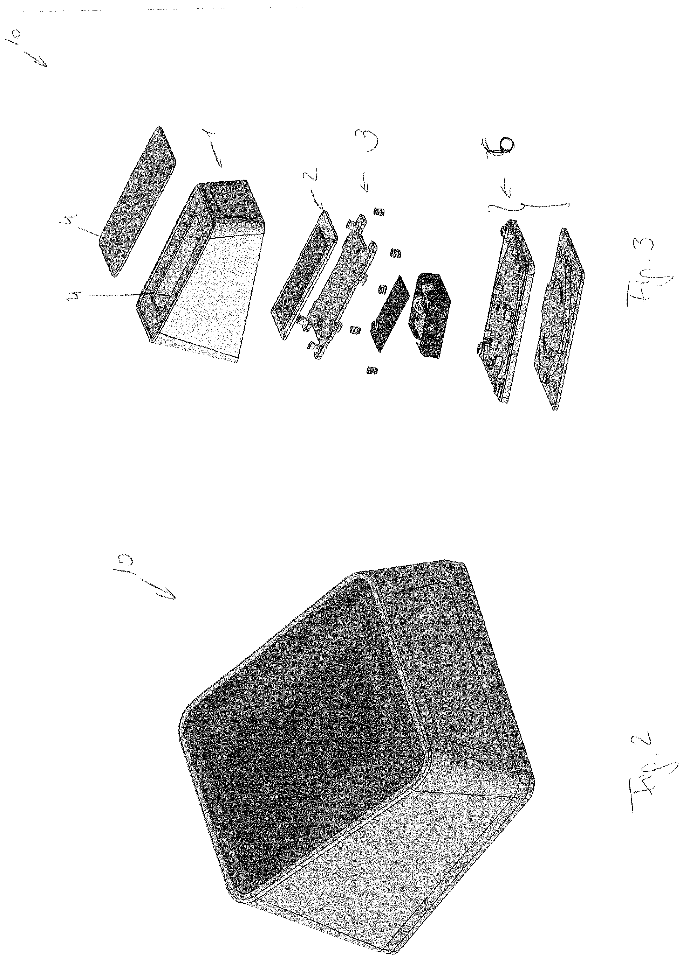

Die Figuren 1 bis 3 zeigen ein erfindungsgemäßes Ausgabegerät 10 in einer bevorzugten Ausgestaltung in unterschiedlichen Darstellungsformen. Gezeigt ist eine Querschnittszeichnung des Ausgabegeräts 10.

Das Ausgabegerät 10 umfasst ein Gehäuse 1 mit einer Bodenplatte 6, einer Deckplatte 7 sowie Seitenelementen 8. In der gezeigten Ausgestaltung ist in der Deckplatte 7 des Gehäuses ein Fenster 4 angeordnet. Hinter diesem Fenster 4 ist das Fenster ausfüllend bzw. überlappend ein Display 2 angeordnet.

Bei dem Display 2 handelt es sich bevorzugt um ein nicht leuchtendes Display 2, wie beispielsweise ein elektronisches Papier. Das Display 2 ist steuertechnisch mit einem Steuergerät 3 verbunden, welches im Inneren des Gehäuses angeordnet ist. Bei dem Steuergerät 3 handelt es sich bevorzugt um eine Leiterplatte 3, oder auch PCB (Printed Circuit Board). Auf dem Steuergerät 3 ist ein Algorithmus zur regelmäßigen Generierung zweidimensionaler und unterscheidbarer IDs hinterlegt.

Das Gehäuse ist über die Bodenplatte 6 fest mit einer Unterlage verwendbar ausgestaltet. Die Verbindung kann beispielsweise über eine stoffschlüssige Verbindung, wie beispielsweise ein Klebemittel, oder aber über eine kraftschlüssige Verbindung, wie beispielsweise eine Verschraubung o. ä. erfolgen.

Mit dem Steuergerät 3 und/oder dem Display 2 ist eine autarke Stromversorgung 5 verbunden, welche ebenfalls im Inneren des Gehäuses 1 angeordnet ist.

Nach ihrer Generierung wird die ID, gesteuert über das Steuergerät 3 auf dem Display 2 ausgegeben.

### Bezugszeichenliste

- 10: Ausgabegerät

- 1: Gehäuse
- 2: Display, nicht leuchtendes Display, elektronisches Papier
- 3: Steuergerät, Leiterplatte, PCB
- 4: Fenster
- 5: autarke Stromversorgung, Akkumulator
- 6: Bodenplatte
- 7: Deckplatte
- 8: Seitenelemente

## Patentansprüche

1. Ausgabegerät zum Anzeigen einer individuellen zweidimensionalen ID aufweisend
- ein Gehäuse,
- ein am Gehäuse angeordnetes Display zur Ausgabe der ID
- ein mit dem Display elektronisch und steuerungstechnisch verbundenes Steuergerät zur Steuerung der Ausgabe der ID, wobei das Steuergerät eingerichtet ist, nach einem definierten Algorithmus in vordefinierten zeitlichen Intervallen eine individuelle zweidimensionale ID zu generieren, welche auf dem Display ausgegeben wird.

2. Ausgabegerät nach Anspruch 1, wobei das Display ein nicht leuchtendes Display, insbesondere ein elektronisches Papier umfassend ist.

3. Ausgabegerät nach einem der vorhergehenden Ansprüche, wobei die ID einen QR-Code umfasst oder aus einem solchen besteht.

4. Ausgabegerät nach einem der vorhergehenden Ansprüche, wobei auf Basis des Algorithmus automatisiert, insbesondere in vordefinierten Intervallen von mehr als 2 Minuten, insbesondere im Bereich von 5 und 120 Minuten, vorzugsweise im Bereich von 10 bis 60 Minuten je eine neue ID generiert wird.

5. Ausgabegerät nach einem der vorhergehenden Ansprüche, wobei das Steuergerät autark ist und insbesondere keine Verbindung zu externen Steuergeräten aufweist.

6. Ausgabegerät nach einem der vorhergehenden Ansprüche, wobei die ID Informationen aufweist, die eine individuelle Charakterisierung, insbesondere über einen spezifischen Ort, eine aktuelle Zeit und/oder eine bestimmte Person ermöglichen.

7. Ausgabegerät nach einem der vorhergehenden Ansprüche, wobei ferner eine URL einer Zielseite, die insbesondere zu einer App oder einer Bestellkarte oder einem Katalog auf einer Website führt, in der ID hinterlegt ist.

8. Verfahren zum Bestellen einer Ware und/oder Dienstleistung in einem Ladengeschäft oder einer gastronomischen Einrichtung unter Verwendung eines Ausgabegeräts nach einem der vorherigen Ansprüche, umfassend die folgenden Schritte
a. Generierung einer zweidimensionalen ID und Ausgabe derselben auf dem Display des Ausgabegeräts,
b. Scannen der ID mit einem Lesegerät, welches eingerichtet ist, die ID zu decodieren,
c. Öffnen einer Zielseite und/oder einer App auf dem Lesegerät oder einem mit dem Lesegerät verbundenem Endgerät, wobei die Zielseite oder App eingerichtet ist, die zu bestellende Ware durch Kennzeichnung auszuwählen, und
d. Verknüpfen der ausgewählten Ware mit zumindest einer in der ID hinterlegten Information.

9. Verfahren nach Anspruch 8, wobei die in Schritt (d.) zu verknüpfenden Informationen eine eindeutige Zuordnung einer Position, Ausgabeort oder Wartenummer in der gastronomischen Einrichtung ermöglichen.

10. Verfahren nach einem der Ansprüche 8 oder 9, wobei zumindest eine der Informationen, insbesondere die Position für eine vorbestimmte Zeitdauer und/oder bis zur Freigabe, insbesondere über ein weiteres Endgerät steuerbaren Signals zur Verknüpfung mit einer weiteren Auswahl, insbesondere über ein anderes Lesegerät blockiert wird.
